(19) Europäisches Patentamt / European Patent Office / Office européen des brevets

(11) **EP 2 742 075 B1**

(12) **EUROPÄISCHE PATENTSCHRIFT**

(45) Veröffentlichungstag und Bekanntmachung des Hinweises auf die Patenterteilung:
**02.03.2016 Patentblatt 2016/09**

(21) Anmeldenummer: **12738452.7**

(22) Anmeldetag: **23.07.2012**

(51) Int Cl.:
*C08F 216/02* (2006.01)  *C08F 222/06* (2006.01)
*C08F 2/38* (2006.01)  *C11D 3/37* (2006.01)
*C08F 220/06* (2006.01)  *C08F 220/58* (2006.01)

(86) Internationale Anmeldenummer:
**PCT/EP2012/064406**

(87) Internationale Veröffentlichungsnummer:
**WO 2013/020799 (14.02.2013 Gazette 2013/07)**

(54) **COPOLYMERE AUS ISOPRENOL, MONOETHYLENISCH UNGESÄTTIGTEN MONOCARBONSÄUREN UND SULFONSÄUREN, VERFAHREN ZU IHRER HERSTELLUNG UND IHRE VERWENDUNG ALS BELAGSINHIBITOREN IN WASSERFÜHRENDEN SYSTEMEN**

COPOLYMERS MADE OF ISOPRENOL, MONOETHYLENICALLY UNSATURATED MONOCARBOXYLIC ACIDS AND SULPHONIC ACIDS, PROCESS FOR PRODUCING SAME AND USE OF SAME AS DEPOSIT INHIBITORS IN SYSTEMS CONVEYING WATER

COPOLYMÈRES D'ISOPRÉNOL, D'ACIDES MONOCARBOXYLIQUES À INSATURATION MONOÉTHYLÉNIQUE, ET D'ACIDES SULFONIQUES, LEUR PROCÉDÉ DE FABRICATION ET LEUR UTILISATION EN TANT QU'INHIBITEURS DE DÉPÔTS DANS DES SYSTÈMES À CIRCULATION D'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2011 EP 11177170**

(43) Veröffentlichungstag der Anmeldung:
**18.06.2014 Patentblatt 2014/25**

(73) Patentinhaber: **BASF SE**
**67056 Ludwigshafen (DE)**

(72) Erfinder:
• **GÄDT, Torben**
**83278 Traunstein (DE)**
• **DETERING, Jürgen**
**67117 Limburgerhof (DE)**
• **NIED, Stephan**
**67435 Neustadt/Wstr. (DE)**

(56) Entgegenhaltungen:
**EP-A2- 0 396 303     US-A- 4 711 725**

• **DATABASE WPI Week 198431 Thomson Scientific, London, GB; AN 1984-191752 XP002682081, & JP 59 108010 A (NIPPON SHOKUBAI KAGAKU KOGYO CO LTD) 22. Juni 1984 (1984-06-22)**

## Beschreibung

Die Erfindung betrifft Copolymere aus Isoprenol, monoethylenisch ungesättigten Monocarbonsäuren und Sulfonsäuren, ein Verfahren zu ihrer Herstellung sowie ihre Verwendung als Belagsinhibitoren in wasserführenden Systemen.

Die Löslichkeit der meisten Stoffe in Wasser ist begrenzt. Insbesondere in der industriellen Wasserbehandlung ist die Verhinderung mineralischer Ablagerungen in wasserführenden Systemen eine essentielle Aufgabe. Anorganische Salze wie Calciumcarbonat, Magnesiumhydroxid, Calcium- und Bariumsulfat und Calciumphosphat oder Calciumphosphonat besitzen in Wasser eine geringe Löslichkeit. Kommt es zu einer Aufkonzentration dieser gelösten Inhaltsstoffe in wässrigen Systemen (Eindickung), so wird das Löslichkeitsprodukt überschritten mit der Folge, dass diese Stoffe ausfallen und Ablagerungen verursachen. Die Löslichkeit der Stoffe ist zusätzlich abhängig von der Temperatur und dem pH-Wert. Insbesondere weisen viele Stoffe wie Calciumcarbonat, oder Calciumsulfat eine inverse Löslichkeit auf, d.h. ihre Löslichkeit sinkt mit zunehmender Temperatur. Dies führt dazu, dass hohe Prozesstemperaturen häufig die Ursache für unerwünschte Ausfällungen und Belagsbildungen in Kühl- und Kesselspeisewassersystemen, auf Wärmeübertragungsflächen oder in Rohrleitungen sind.

Ausfällungen und Ablagerungen anorganischer Stoffe und Salze in wasserführenden Systemen sind nur mit großem Aufwand wieder zu entfernen. Jede mechanische und chemische Reinigung ist kosten- und zeitintensiv und führt unweigerlich zu Produktionsausfällen.

Nicht nur in Kühl- und Kesselspeisewassersystemen wird versucht, die Bildung von Calciumcarbonat-, Calciumsulfat- und anderen Salzbelägen zu vermeiden. Auch in der Meerwasserentsalzung durch Destillation und durch Membranverfahren wie Umkehrosmose oder Elektrodialyse ist man bestrebt, diese festen Beläge nicht entstehen zu lassen.

Von besonderem Interesse sind multifunktionelle Belagsverhinderer, welche gute Inhibierungseigenschaften für Calciumcarbonat, Calciumsulfat, Calciumphosphat und Calciumphosphonatbeläge aufweisen. Dies stellt für herkömmliche Belagsverhinderer wie z.B. Polyacrylsäuren ein Problem dar. Derartige Homopolymere sind häufig gute Belagsverhinderer für Calciumcarbonat oder Calciumsulfat, haben aber insbesondere für Calciumphosphat und Calciumphosphonatbeläge kaum inhibierende Wirkung.

Es ist bekannt, mittels radikalischer Polymerisation hergestellte niedermolekulare Polyacrylsäuren und deren Salze aufgrund ihrer dispergierenden und das Kristallwachstum inhibierenden Eigenschaften als Belagsverhinderer in der industriellen Wasserbehandlung und bei der Meerwasserentsalzung zu verwenden. Für eine gute Wirkung sollte das Molekulargewichtsmittel ($M_w$) dieser Polymere < 50 000 g/mol sein. Oft werden Polyacrylsäuren mit $M_w$ < 10 000 g/mol als besonders effektiv beschrieben. Nachteil dieser Polymere ist ihre mit steigender Temperatur wachsende Härteempfindlichkeit, d.h. die Gefahr, dass die Polymere als Ca- oder Mg-Polyacrylate ausfallen nimmt zu. Weiterhin besitzen die Polyacrylsäuren nur eine sehr geringe inhibierende Wirkung gegenüber Ablagerungen aus Calciumphosphat oder Calciumphosphonat.

Korrosionsschutz ist in industriellen wässrigen Prozessen unabdingbar. Unter den gängigen Korrosionsinhibitoren nehmen Phosphate und Phosphonate eine herausragende Bedeutung ein. Mit dem Einsatz von Phosphaten oder Phosphonaten als Korrosionsinhibitoren steigt jedoch die Gefahr von Ablagerungen aus Calciumphosphat bzw. Calciumphosphonat. Diese Ablagerungen sind besonders problematisch, da sie nur unter hohem Aufwand wieder zu entfernen sind.

Als Belagsverhinderer sind neben reinen Polyacrylsäuren zahlreiche Copolymere, Terpolymere und Quaterpolymere beschrieben worden. Dabei werden in der Regel Copolymere aus ungesättigten Carbonsäuren wie Acrylsäure, sulfonathaltigen Monomeren wie 2-Acrylamido-2-methylpropansulfonat, Styrolsulfonat oder Sulfoethylmethacrylat und optional nicht ionischen Monomeren beschrieben. Bei den nicht ionischen Monomeren handelt es sich häufig um Acrylamid, Acrylamid-Derivate wie N-Alkylacylamide, Methacrylamid-Derivate, Alkylacrylate, Hydroxyalkylacrylate, Alkylmethacrylate oder Vinylacetat.

US 4,711,725 beschreibt Terpolymere aus (1) (Meth)acrylsäure, (2) Acrylamidoalkyl- oderarylsulfonaten, insbesondere 2-Acrylamido-2-methylpropansulfonat (AMPS), und (3) Vinylestern wie Ethylacrylat und Hydroxyethylmethacrylat oder Acrylamiden wie tert.-Butylacrylamid als Belagsinhibitoren für wässrige Systeme.

US 4,952,327 beschreibt Terpolymere aus (1) (Meth)acrylsäure oder Maleinsäure, (2) Acrylamidoalkansulfonsäure, insbesondere AMPS, und (3) Styrolsulfonsäure als Belagsinhibitoren für wässrige Systeme.

JP 59102496 beschreibt die Herstellung von Copolymeren aus 0,5 bis 50 Gew.-% eines ungesättigten Alkohols wie Isoprenol mit 50 bis 99,5 Gew.-% einer olefinischen Mono- oder Dicarbonsäure wie z.B. Acrylsäure oder Maleinsäure und optional mit 0 bis 40 Gew.-% eines dritten Monomers, welches unter anderem Styrolsulfonat, Acrylnitril oder Vinylacetat umfasst. Die erhaltenen Polymere werden als Inkrustationsinhibitoren in der industriellen Wasserbehandlung beschrieben. Die Monomere werden bei 95 °C mit einer Mischung aus Wasserstoffperoxid und Natriumpersulfat als Initiator umgesetzt. Das Molekulargewicht der erhaltenen Polymere liegt zwischen 3 200 und 4 000 g/mol.

EP-A 337 694 betrifft die Herstellung vom Maleinsäure-Copolymeren mit einem zahlenmittleren Molekularge-

wicht $M_n$ von 300 bis 5000 g/mol und einer Polydispersität von < 2,5 aus 50 bis 99,9 Gew.-% Maleinsäure und 50 bis 0,1 Gew.-% eines wasserlöslichen ungesättigten Comonomeren, sowie deren Verwendung für die Wasserbehandlung. Ausdrücklich genannt werden die Verwendung als Antiscalant und als Builder in Waschmittelformulierungen. Als Comonomere werden u. a. monoethylenisch ungesättigte Monocarbonsäuren wie Acrylsäure und Methacrylsäure, ungesättigte Dicarbonsäuren wie Fumarsäure und Itaconsäure, ungesättigte Alkohole wie Isoprenol, (Meth)allylether und monoethylenisch ungesättigte Sulfonsäuregruppen enthaltende Verbindungen wie Vinylsulfonsäure und 2-Acrylamido-2-methylpropansulfonsäure beschrieben. Die Copolymere werden durch wässrige Polymerisation mit $H_2O_2$ als Initiator in Gegenwart von 0,5 bis 500 ppm eines Metallkatalysators umfassend Eisen-, Kupfer- oder Vanadiumionen beschrieben. Es wird kein Regler verwendet. Während der Polymerisation wird Kohlendioxid freigesetzt, wobei die Menge an Kohlendioxid proportional zur Menge an $H_2O_2$ ist. In den Beispielen werden Maleinsäure-Isoprenol-Copolymere mit zahlenmittleren Molekulargewichten zwischen 1090 und 4780 g/mol hergestellt, wobei die Polymerisation am Siedepunkt der wässrigen Monomerlösung durchgeführt wird.

EP-A 396 303 betrifft die Herstellung von Maleinsäurepolymeren aus 75 bis 100 Gew.-% Maleinsäure und 0 bis 25 Gew.-% eines weiteren wasserlöslichen Monomeren durch wässrige Polymerisation mit 12 bis 150 g $H_2O_2$ pro Mol der Monomerkomponenten, 0,3 bis 500 ppm eines Metallsalzes von Eisen, Vanadium oder Kupfer und einer alkalischen Substanz wie Alkalimetallhydroxid oder Alkalimetallcarbonat, um bis zu 45 Gew.- % Monomere mit sauren Gruppen zu neutralisieren. Als Comonomere werden u. a. ungesättigte Monocarbonsäuren wie Acrylsäure und Methacrylsäure, ungesättigte Dicarbonsäuren wie Fumarsäure und Itaconsäure, ungesättigte Alkohole wie Isoprenol, (Meth)allylether und ungesättigte Sulfonsäuregruppen enthaltende Verbindungen wie Vinylsulfonsäure und 2-Acrylamido-2-methylpropansulfonsäure beschrieben. Es wird kein Regler verwendet. Die Polymerisationstemperatur soll im Bereich von 85 bis 160 °C liegen. In den Beispielen werden Copolymere aus 80 Gew.-% Maleinsäure und 20 Gew.-% Isoprenol mit zahlenmittleren Molekulargewichten zwischen 2400 und 4100 g/mol hergestellt. Die Polymerisation wird am Siedepunkt des Monomergemischs durchgeführt. Beschrieben wird die Verwendung der Copolymere als Waschmittelbuilder und Antiscalants.

Ein Nachteil der Verfahren des Standes der Technik ist der relativ enge Molekulargewichtsbereich der so erhältlichen, Isoprenol enthaltenden Copolymere, sowie die hohen Polymerisationstemperaturen, bei denen olefinische Alkohole wie Isoprenol einem chemischen Abbau unterliegen (siehe F. Lynen, Liebigs Ann. Chem. 1960, 360, 58 bis 70). Damit verbunden ist eine reduzierte Wirksamkeit der dem Stand der Technik entsprechenden Isoprenol enthaltenden Polymere.

Aufgabe der Erfindung ist es, multifunktionelle belagsinhibierende Polymere bereitzustellen, welche eine möglichst breite Wirksamkeit gegen Ausfällungen und Ablagerungen von Calcium- und Magnesiumsalzen aufweisen und insbesondere Ausfällungen und Ablagerungen von Calciumcarbonat, Calciumsulfat, Calciumphosphat und Calciumphosphonat in wasserführenden Systemen wirksam inhibieren. Weiterhin ist es Aufgabe der vorliegenden Erfindung, ein geeignetes Verfahren zur Herstellung der Copolymere bereit zu stellen.

Gelöst wird die Aufgabe durch Copolymere aus

(a) 5 bis 40 Gew.-% Isoprenol,

(b) 5 bis 93 Gew.-% mindestens einer monoethylenisch ungesättigten $C_3$- bis $C_8$-Monocarbonsäure, eines Anhydrids oder Salzes derselben,

(c) 2 bis 90 Gew.-% eines oder mehrerer Sulfonsäuregruppen enthaltender Monomere.

Geeignete monoethylenisch ungesättigte $C_3$-$C_8$-Monocarbonsäuren, die als Monomere (b) eingesetzt werden können, sind beispielsweise Acrylsäure, Methacrylsäure, Ethacrylsäure, Vinylessigsäure, Allylessigsäure und Crotonsäure sowie deren wasserlösliche Salze. Soweit die genannten ungesättigten $C_3$-$C_8$-Monocarbonsäuren Anhydride bilden können, sind auch diese als Monomere (b) geeignet, beispielsweise Methacrylsäureanhydrid.

Bevorzugte monoethylenisch ungesättigte $C_3$-$C_8$-Monocarbonsäuren (b) sind Acrylsäure, Methacrylsäure, Ethacrylsäure, Vinylessigsäure, Allylessigsäure und Crotonsäure, besonders bevorzugt sind Acrylsäure und Methacrylsäure.

Sulfonsäuregruppen-haltige Monomere (c) sind bevorzugt solche der Formeln (Ia) und (Ib)

$$H_2C=CH\text{-}X\text{-}SO_3H \qquad (Ia),$$

$$H_2C=C(CH_3)\text{-}X\text{-}SO_3H \qquad (Ib),$$

worin X für eine optional vorhandene Spacergruppe steht, die ausgewählt sein kann aus $-(CH_2)_n$- mit n = 0 bis 4, $-C_6H_4$-, $-CH_2\text{-}O\text{-}C_6H_4$-, $-C(O)\text{-}NH\text{-}C(CH_3)_2$-, $-C(O)\text{-}NH\text{-}CH(CH_2CH_3)$-, $-C(O)NH\text{-}CH(CH_3)CH_2$-, $-C(O)NH\text{-}C(CH_3)_2CH_2$-,

-C(O)NH-CH$_2$CH(OH)CH$_2$-, -C(O)NH-CH$_2$-, -C(O)NH-CH$_2$CH$_2$- und -C(O)NH-CH$_2$CH$_2$CH$_2$-.

Besonders bevorzugte Sulfonsäuregruppen-haltige Monomere sind dabei 1-Acrylamido-1-propansulfonsäure (X = -C(O)NH-CH(CH$_2$CH$_3$)- in Formel IIa), 2-Acrylamido-2-propansulfonsäure (X = -C(O)NH-CH(CH$_3$)CH$_2$- in Formel IIa), 2-Acrylamido-2-methylpropansulfonsäure (AMPS, X = -C(O)NH-C(CH$_3$)$_2$CH$_2$- in Formel IIa), 2-Methacrylamido-2-methylpropansulfonsäure (X = -C(O)NH-C(CH$_3$)$_2$CH$_2$- in Formel IIb), 3-Methacrylamido-2-hydroxypropansulfonsäure (X = -C(O)NH-CH$_2$CH(OH)CH$_2$- in Formel IIb), Allylsulfonsäure (X = CH$_2$ in Formel IIa), Methallylsulfonsäure (X = CH$_2$ in Formel IIb), Allyloxybenzolsulfonsäure (X = -CH$_2$-O-C$_6$H$_4$- in Formel IIa), Methallyloxybenzolsulfonsäure (X = -CH$_2$-O-C$_6$H$_4$- in Formel IIb), 2-Hydroxy-3-(2-propenyloxy)propansulfonsäure, 2-Methyl-2-propen-1-sulfonsäure (X = CH$_2$ in Formel IIb), Vinylsulfonsäure (X nicht vorhanden in Formel IIa), 3-Sulfopropylacrylat (X = -C(O)O-CH$_2$CH$_2$CH$_2$- in Formel IIa), 2-Sulfoethylmethacrylat (X = -C(O)O-CH$_2$CH$_2$- in Formel IIb), 3-Sulfopropylmethacrylat (X =-C(O)O-CH$_2$CH$_2$CH$_2$- in Formel IIb), Sulfomethacrylamid (X = -C(O)NH- in Formel IIb), Sulfomethylmethacrylamid (X= -C(O)NH-CH$_2$- in Formel IIb) sowie Salze der genannten Säuren. Geeignete Salze sind im Allgemeinen wasserlösliche Salze, bevorzugt die Natrium-, Kalium und Ammoniumsalze der genannten Säuren.

Insbesondere bevorzugt sind 1-Acrylamidopropansulfonsäure, 2-Acrylamido-2-propansulfonsäure, 2-Acrylamido-2-methylpropansulfonsäure (AMPS), 2-Methacrylamido-2-methylpropansulfonsäure, 3-Methacrylamido-2-hydroxypropansulfonsäure, 2-Sulfoethylmethacrylat, Sulfonsäure, Vinylsulfonsäure, Allylsulfonsäure (ALS) und Methallylsulfonsäure sowie Salze der genannten Säuren.

Ganz besonders bevorzugte Sulfonsäuregruppen-haltige Monomere sind 2-Acrylamido-2-methylpropansulfonsäure (AMPS) und Allylsulfonsäure sowie deren wasserlösliche Salze, insbesondere deren Natrium-, Kalium- und Ammoniumsalze. Insbesondere bevorzugt ist AMPS.

Im Allgemeinen beträgt das gewichtsmittlere Molekulargewicht der Copolymere 2 000 bis 20 000 g/mol, bevorzugt 2 500 bis 15 000 g/mol und besonders bevorzugt 3 000 bis 13 000 g/mol.

Das Molekulargewicht wird mittels Gelpermeationschromatographie gegen Polyacrylsäure-Standards ermittelt.

Im Allgemeinen beträgt der Polydispersitätsindex der Copolymere M$_w$ / M$_n$ ≤ 2,5, bevorzugt ≤ 2,0.

Im Allgemeinen enthalten die erfindungsgemäßen Copolymere 5 bis 35 Gew.-% Isoprenol (a), 30 bis 80 Gew.-% der monoethylenisch ungesättigten C$_3$- bis C$_8$-Carbonsäure (b) und 5 bis 50 Gew.-% des Sulfonsäuregruppen-haltigen Monomers (c). Besonders bevorzugt enthalten sie 5 bis 30 Gew.-% Isoprenol (a), 50 bis 80 Gew.-% der monoethylenisch ungesättigten C$_3$- bis C$_8$-Carbonsäure (b) und 10 bis 30 Gew.-% des Sulfonsäuregruppen-haltigen Monomers (c).

Die erfindungsgemäßen Copolymere zeichnen sich insbesondere dadurch aus, dass sie durch ein besonders mildes Polymerisationsverfahren erhalten werden, bei dem es nicht zu Nebenreaktionen wie der Isomerisierung von Isoprenol zu Prenol oder Dimethylvinylcarbinol, der Bildung von 3-Methyl-1,3-butandiol oder Isopren oder zur Decarboxylierung von Maleinsäure kommt.

Bekannte Verfahren zur Herstellung von Isoprenol enthaltenden Copolymeren beruhen auf einer radikalischen Polymerisation bei erhöhten Temperaturen um 100 °C. Es ist bekannt, dass insbesondere Isoprenol unter sauren Bedingungen und hohen Temperaturen rasch einem chemischen Abbau unterliegt (F. Lynen, Liebigs Ann. Chem. 1960, 360, 58 bis 70). Dagegen ermöglicht das erfindungsgemäße Verfahren eine wesentlich mildere Polymerisationsreaktion bei Temperaturen zwischen 10 bis 80 °C. So wird ein Abbau des Isoprenols effektiv unterbunden. Bevorzugt wird die Polymerisation bei 10 bis 70 °C, besonders bevorzugt bei 10 bis 60 °C durchgeführt.

Das erfindungsgemäße Verfahren wird im Allgemeinen halbkontinuierlich in Zulauffahrweise durchgeführt. Als Lösemittel wird in der Regel Wasser verwendet.

Gemäß einer bevorzugten Ausführungsform wird die Polymerisation in wässriger Lösung mit einem Monomerengehalt von 25 bis 50 Gew.-% durchgeführt. Dabei wird die radikalische Polymerisation unter sauren Bedingungen, im Allgemeinen bei pH 0,5 bis 6,5 durchgeführt. Es wird vorzugsweise so gearbeitet, dass alle Monomere (a), (b) und (c) als Zulauf zugegeben werden, wobei die monoethylenisch ungesättigten C$_3$- bis C$_8$-Monocarbonsäuren (b), z.B. Acrylsäure, auch teilneutralisiert werden können. Isoprenol (a), monoethylenisch ungesättigte C$_3$- bis C$_8$-Monocarbonsäure (b), z.B. Acrylsäure, und Sulfonsäuregruppen enthaltendes Monomer (c), beispielsweise 2-Acrylamido-2-methylpropansulfonsäure, können aber auch ganz oder teilweise vorgelegt werden. Beispielsweise kann sich das Monomer (c) in der Vorlage befinden und die Monomere (a) und (b) können als Zulauf zugegeben werden. (Meth)allylsulfonat als Monomer (c) wird vorzugsweise vorgelegt.

In einer weiteren Ausführungsform wird die Polymerisation in einem Wasser/Methanol-Gemisch mit einem Monomerengehalt von 25 bis 50 Gew.-% durchgeführt. In einer speziellen Ausführungsform wird Isoprenol in Methanol als Zulauf zugegeben. Nach Ende der Polymerisation kann Methanol unter reduziertem Druck entfernt werden, wobei eine wässrige Polymerlösung mit einem Feststoffgehalt von vorzugsweise 30 bis 60 Gew.-% erhalten wird.

Das Reduktionsmittel wird im Allgemeinen separat als Zulauf zugegeben. Dieses senkt die Aktivierungsschwelle des peroxidischen Initiators, so dass die Copolymerisation bei niedrigen Temperaturen durchgeführt werden kann.

Im Allgemeinen umfasst der redoxchemische Initiator ein Peroxid und ein Reduktionsmittel.

Geeignete Peroxide sind beispielsweise Wasserstoffperoxid, Natrium-, Kalium- oder Ammoniumperoxodisulfat, tert.-Butylhydroperoxid, Dibenzoylperoxid oder Cumylhydroperoxid. In einer bevorzugten Ausführungsform umfasst der Initiator Wasserstoffperoxid. Wasserstoffperoxid wird im Allgemeinen als wässrige Lösung, beispielsweise mit einem Wasserstoffperoxid-Gehalt von 30 Gew.-%, eingesetzt.

Wasserstoffperoxid befindet sich vorzugsweise in der Vorlage, kann aber auch als Zulauf zugegeben werden.

Geeignete Reduktionsmittel sind beispielsweise Eisen(II)-Salze, Natriumhydroxymethansulfinat (beispielsweise als Rongalit oder Brüggolit SFS erhältlich), Natrium-2-hydroxy-2-sulfinatoessigsäure (beispielsweise als Brüggolit FF06 erhältlich), Ascorbinsäure, Alkalimetallsulfite und Alkalimetallmetabisulfite, Natriumhypophosphit und Thioharnstoff. In einer bevorzugten Ausführungsform umfasst der Initiator als Reduktionsmittel Natriumhydroxymethansulfinat oder Natrium-2-hydroxy-2-sulfinatoessigsäure.

In einer weiteren Ausführungsform umfasst der Initiator zusätzlich zu dem Peroxid und dem Reduktionsmittel ein Eisensalz.

In einer besonders bevorzugten Ausführungsform umfasst der redoxchemische Initiator Wasserstoffperoxid, ein Eisensalz sowie ein Reduktionsmittel.

Als Regler geeignet sind anorganische Schwefelverbindungen wie Hydrogensulfite, Disulfite und Dithionite, organische Sulfide, Sulfoxide, Sulfone und Mercaptoverbindungen wie Mercaptoethanol, Mercaptoessigsäure sowie anorganische Phosphorverbindungen wie Hypophosphorige Säure (Phosphinsäure) und ihre Salze, z.B. Natriumhypophosphit.

In einer bevorzugten Ausführungsform enthält der Regler eine Mercaptoverbindung, insbesondere Mercaptoethanol.

Der Regler wird im Allgemeinen zumindest teilweise als Zulauf zugegeben. Eine Teilmenge des Reglers kann sich auch in der Vorlage befinden.

Gegenstand der vorliegenden Erfindung ist auch die Verwendung der Copolymere zur Inhibierung der Ausfällung und Ablagerung von Calciumsalzen in wasserführenden Systemen, insbesondere zur Inhibierung der Ausfällung und Ablagerung von Calciumcarbonat, Calciumsulfat, Calciumphosphat oder Calciumphosphonat. Die erfindungsgemäßen Copolymere zeichnen sich dadurch aus, dass sie die Ausfällung von zwei oder mehr der genannten Calciumsalze inhibieren.

Wasserführende Systeme, in denen die Isoprenol-haltigen Copolymere verwendet werden können, sind insbesondere Kühlwassersysteme und Kesselspeisewassersysteme, aber auch Meerwasser-Entsalzungsanlagen.

Im Allgemeinen werden die erfindungsgemäßen Polymere den wasserführenden Systemen in Mengen von 0,1 mg/l bis 100 mg/l zugegeben. Die optimale Dosierung richtet sich nach den Erfordernissen der jeweiligen Anwendung und nach den Betriebsbedingungen des jeweiligen Verfahrens. So werden bei der thermischen Meerwasserentsalzung die Polymere bevorzugt in Konzentrationen von 0,5 mg/l bis 10 mg/l eingesetzt. In industriellen Kühlkreisläufen oder Kesselspeisewassersystemen finden Polymerkonzentrationen bis zu 100 mg/l Anwendung. Häufig werden Wasseranalysen durchgeführt, um den Anteil belagsbildender Salze und somit die optimale Dosierung zu ermitteln.

Den wasserführenden Systemen können auch Formulierungen zugegeben werden, die neben den erfindungsgemäßen Copolymeren je nach Anforderung u.a. Phosphonate, Polyphosphate, Zinksalze, Molybdatsalze, organische Korrosionsinhibitoren wie Benzotriazol, Tolyltriazol, Benzimidazol oder Ethinylcarbinolalkoxylate, Biozide, Komplexbildner und/oder Tenside enthalten können. Beispiele für Phosphonate sind 1-Hydroxyethan-1.1-diphosphonsäure (HEDP), 2-Phosphonobutan-1,2,4-tricarbonsäure (PBTC), Aminotrimethylenphosphonsäure (ATMP), Diethylentriaminpenta(methylen-phosphonsäure) (DTPMP) und Ethylendiamintetra(methylenphophonsäure) (EDTMP), die in Säureform oder in Form ihrer Natriumsalze verwendet werden.

Die Erfindung wird durch die nachstehenden Beispiele näher erläutert.

## Beispiele

Die Bestimmung der mittleren Molekulargewichte erfolgte mittels GPC.

| | |
|---|---|
| Gerät: | Waters Alliance 2690 mit UV-Detektor (Waters 2487) und RI-Detektor (Waters 2410) |
| Säulen: | Shodex OHpak SB 804HQ and 802.5HQ (PHM gel, 8 x 300 mm, pH 4,0 bis 7,5) |
| Eluent: | 0,05 M wässrige Ammoniumformiat / Methanol-Mischung = 80:20 (Volumenteile) |
| Flußrate: | 0,5 mL/min |
| Temperatur: | 50°C |
| Injektion: | 50 bis 100 $\mu$L |
| Detektion: | RI und UV |

Molekulargewichte der Polymere wurden relativ zu Polyacrylsäure-Standards der Firma Varian Inc bestimmt. Die Molekulargewichtsverteilungskurven der Polyacrylsäure-Standards wurden mittels Lichtstreuung bestimmt. Die Massen der Polyacrylsäurestandards betrugen 115 000, 47 500, 28 000, 16 000, 7 500, 4 500, 4 100, 2 925 und 1 250 g/mol.

**Synthesebeispiele**

Beispiel 1

IP/AS/AMPS (10/70/20) -Terpolymer

In einem Glasreaktor, ausgestattet mit Rührer, Thermometer, pH-Elektrode und mehreren Zulaufeinrichtungen, wurden 125 g deionisiertes Wasser, 0,5 g 2-Mercaptoethanol und 0,02 g Eisen(11)sulfat-Heptahydrat vorgelegt und auf eine Polymerisations-Start-temperatur von 20 °C temperiert (Vorlage). In einem separaten Zulaufgefäß wurden 81 g 90 gew.-%ige Acrylsäure bereitgestellt (Lösung A). In ein weiteres separates Zulaufgefäß wurden 10 g Isoprenol eingefüllt (Lösung B). In einem weiteren separaten Zulaufgefäß wurden 45 g einer 50 gew.-%igen wässrigen AMPS-Lösung mit 4 g 2-Mercaptoethanol vermischt (Lösung C). Parallel dazu wurde eine dritte Lösung aus 5 g Natriumhydroxymethansulfinat (Brüggolit SFS Fa. Brüggemann GmbH) in 45 g Wasser hergestellt (Lösung D). Dann wurden 14 g Wasserstoffperoxid (30 Gew.-% in Wasser) zu dem Vorlagegemisch gegeben. Zeitgleich wurde mit der Zugabe von Lösung A, Lösung B, Lösung C und Lösung D zur gerührten Vorlage begonnen.

Lösung A wurde über 60 Minuten mit einer Dosiergeschwindigkeit von 80 g/h zugegeben.

Lösung B wurde über einen Zeitraum von 60 Minuten parallel mit einer Dosiergeschwindigkeit von 10 g/h zugegeben.

Lösung C wurde über einen Zeitraum von 60 Minuten parallel mit einer Dosiergeschwindigkeit von 49 g/h zugegeben.

Lösung D wurde über einen Zeitraum von 70 Minuten parallel mit einer Dosiergeschwindigkeit von 20 g/h zugegeben.

Anschließend wurde die erhaltene Polymerlösung mit einer 50 gew.-%igen Natriumhydroxid-Lösung auf einen pH-Wert von 2,6 eingestellt.
Das erhaltene Copolymer fiel in einer farblosen Lösung an, die einen Feststoffgehalt von 37 % aufwies. Das mittlere Molekulargewicht des Copolymers lag bei Mw 4900 g/mol.

Beispiel 2

IP/AS/AMPS (10/70/20) -Terpolymer

In einem Glasreaktor, ausgestattet mit Rührer, Thermometer, pH-Elektrode und mehreren Zulaufeinrichtungen, wurden 125 g deionisiertes Wasser, 0,5 g 2-Mercaptoethanol und 0,02 g Eisen(II)sulfat-Heptahydrat vorgelegt und auf eine Polymerisationsstarttemperatur von 20 °C temperiert (Vorlage). In einem separaten Zulaufgefäß wurden 81 g 90 Gew.-% Acrylsäure bereitgestellt (Lösung A). In ein weiteres separates Zulaufgefäß wurden 10 g Isoprenol eingefüllt (Lösung B). In einem weiteren separaten Zulaufgefäß

wurden 45 g einer 50 Gew.-% wässrigen AMPS-Lösung mit 2 g 2-Mercaptoethanol vermischt (Lösung C). Parallel dazu wurde eine dritte Lösung aus 5 g Natriumhydroxymethansulfinat (Brüggolit SFS Fa. Brüggemann GmbH) in 45 g Wasser hergestellt (Lösung D). Dann wurden 14 g Wasserstoffperoxid (30 Gew.-% in Wasser) zu dem Vorlagegemisch gegeben. Zeitgleich wurde mit der Zugabe von Lösung A, Lösung B, Lösung C und Lösung D zur gerührten Vorlage begonnen.

Lösung A wurde hierbei über 60 Minuten mit einer Dosiergeschwindigkeit von 80 g/h zugegeben.

Lösung B wurde über den genannten Zeitraum von 60 Minuten parallel mit einer Dosiergeschwindigkeit von 10 g/h zugegeben.

Lösung C wurde über den genannten Zeitraum von 60 Minuten parallel mit einer Dosiergeschwindigkeit von 47 g/h zugegeben.

Lösung D wurde über den genannten Zeitraum von 70 Minuten parallel mit einer Dosiergeschwindigkeit von 20 g/h zugegeben.

Anschließend wurde die erhaltene Polymerlösung mit einer 50 gew.-%igen Natriumhydroxid-Lösung auf einen pH-Wert von 2,6 eingestellt.

Das erhaltene Copolymer fiel in einer farblosen Lösung an, die einen Feststoffgehalt von 36 Gew.-% aufwies. Das mittlere Molekulargewicht des Copolymers lag bei Mw 10 000 g/mol.

Beispiel 3

IP / AS / AMPS (15/60/25) -Terpolymer

In einem Glasreaktor, ausgestattet mit Rührer, Thermometer, pH-Elektrode und mehreren Zulaufeinrichtungen, wurden 125 g deionisiertes Wasser, 0,5 g 2-Mercaptoethanol und 0,02 g Eisen(II)sulfat-Heptahydrat vorgelegt und auf eine Polymerisationsstarttemperatur von 20 °C temperiert. In einem separaten Zulaufgefäß wurden 81 g 90 gew.-%ige Acrylsäure bereitgestellt (Lösung A). In ein weiteres separates Zulaufgefäß wurden 18 g Isoprenol eingefüllt (Lösung B). In einem weiteren separaten Zulaufgefäß wurden 66 g einer 50 gew.-%igen wässrigen AMPS-Lösung mit 4 g 2-Mercaptoethanol vermischt (Lösung C). Parallel dazu wurde eine dritte Lösung aus 5 g Natriumhydroxymethansulfinat (Brüggolit SFS Fa. Brüggemann GmbH) in 45 g Wasser hergestellt (Lösung D). Dann wurden 14 g Wasserstoffperoxid (30 Gew.-% in Wasser) zu dem Vorlagegemisch gegeben. Zeitgleich wurde mit der Zugabe von Lösung A, Lösung B, Lösung C und Lösung D zur gerührten Vorlage begonnen.

Lösung A wurde über einen Zeitraum von 60 Minuten mit einer Dosiergeschwindigkeit von 80 g/h zugegeben.

Lösung B wurde über einen Zeitraum von 60 Minuten parallel mit einer Dosiergeschwindigkeit von 18 g/h zugegeben.

Lösung C wurde über einen Zeitraum von 60 Minuten parallel mit einer Dosiergeschwindigkeit von 70 g/h zugegeben.

Lösung D wurde über einen Zeitraum von 70 Minuten parallel mit einer Dosiergeschwindigkeit von 20 g/h zugegeben.

Anschließend wurde die erhaltene Polymerlösung mit einer 50 gew.-%igen Natriumhydroxid-Lösung auf einen pH-Wert von 2,6 eingestellt.

Das erhaltene Copolymer fiel als farblose Lösung an, die einen Feststoffgehalt von 39 Gew.-% aufwies. Das mittlere Molekulargewicht des Copolymers lag bei Mw 6 500 g/mol.

Beispiel 4

IP / AS / AMPS (20/60/20) -Terpolymer

In einem Glasreaktor, ausgestattet mit Rührer, Thermometer, pH-Elektrode und mehreren Zulaufeinrichtungen, wurden 125 g deionisiertes Wasser, 0,5 g 2-Mercaptoethanol und 0,02 g Eisen(II)sulfat-Heptahydrat vorgelegt und auf eine Polymerisationsstarttemperatur von 20 °C temperiert. In einem separaten Zulaufgefäß wurden 81 g 90 gew.-%ige Acrylsäure bereitgestellt (Lösung A). In ein weiteres separates Zulaufgefäß wurden 24 g Isoprenol eingefüllt (Lösung B). In einem weiteren separaten Zulaufgefäß wurden 53 g einer 50 gew.-%ige wässrigen AMPS-Lösung mit 2 g 2-Mercaptoethanol vermischt (Lösung C). Parallel dazu wurde eine dritte Lösung aus 5 g Natriumhydroxymethansulfinat (Brüggolit SFS Fa. Brüggemann GmbH) in 45 g Wasser hergestellt (Lösung D). Dann wurden 14 g Wasserstoffperoxid (30 Gew.-% in Wasser) zu dem Vorlagegemisch gegeben. Zeitgleich wurde mit der Zugabe von Lösung A, Lösung B, Lösung C und Lösung D zur gerührten Vorlage begonnen.

Lösung A wurde hierbei über 60 Minuten mit einer Dosiergeschwindigkeit von 80 g/h zugegeben.

Lösung B wurde über den genannten Zeitraum von 60 Minuten parallel mit einer Dosiergeschwindigkeit von 24 g/h zugegeben.

Lösung C wurde über den genannten Zeitraum von 60 Minuten parallel mit einer Dosiergeschwindigkeit von 55 g/h zugegeben.

Lösung D wurde über den genannten Zeitraum von 70 Minuten parallel mit einer Dosiergeschwindigkeit von 20 g/h zugegeben.

Anschließend wurde die erhaltene Polymerlösung mit einer 50 gew.-%igen Natriumhydroxid-Lösung auf einen pH-Wert von 2,6 eingestellt.
Das erhaltene Copolymer fiel in einer farblosen Lösung an, die einen Feststoffgehalt von 39 % aufwies. Das mittlere Molekulargewicht des Copolymers lag bei Mw 11 000 g/mol.

Beispiel 5

IP/ AS / ALS (10/70/20) -Terpolymer

In einem Glasreaktor, ausgestattet mit Rührer, Thermometer, pH-Elektrode und mehreren Zulaufeinrichtungen, wurden 140 g deionisiertes Wasser, 20 g Natriumallylsulfonat, 0,5 g 2-Mercaptoethanol und 0,02 g Eisen(II)sulfat-Heptahydrat vorgelegt und auf eine Polymerisationsstarttemperatur von 20 °C temperiert. In einem separaten Zulaufgefäß wurden 81 g 90 gew.-%ige Acrylsäure bereitgestellt (Lösung A). In ein weiteres separates Zulaufgefäß wurden 10 g Isoprenol eingefüllt (Lösung B). In einem weiteren separaten Zulaufgefäß wurden 15 g Wasser mit 4 g 2-Mercaptoethanol vermischt (Lösung C). Parallel dazu wurde eine dritte Lösung aus 5 g Natriumhydroxymethansulfinat (Brüggolit SFS Fa. Brüggemann GmbH) in 45 g Wasser hergestellt (Lösung D). Dann wurden 14 g Wasserstoffperoxid (30 Gew.-% in Wasser) zu dem Vorlagegemisch gegeben. Zeitgleich wurde mit der Zugabe von Lösung A, Lösung B, Lösung C und Lösung D zur gerührten Vorlage begonnen.

Lösung A wurde über einen Zeitraum von 60 Minuten mit einer Dosiergeschwindigkeit von 80 g/h zugegeben.

Lösung B wurde über einen Zeitraum von 60 Minuten parallel mit einer Dosiergeschwindigkeit von 10 g/h zugegeben.

Lösung C wurde über einen Zeitraum von 60 Minuten parallel mit einer Dosiergeschwindigkeit von 19 g/h zugegeben.

Lösung D wurde über einen Zeitraum von 60 Minuten parallel mit einer Dosiergeschwindigkeit von 20 g/h zugegeben.

Anschließend wurde die erhaltene Polymerlösung mit einer 50 gew.-%igen Natriumhydroxid-Lösung auf einen pH-Wert von 2,6 eingestellt.
Das erhaltene Copolymer fiel in einer farblosen Lösung an, die einen Feststoffgehalt von 38 Gew.-% aufwies. Das mittlere Molekulargewicht des Copolymers lag bei Mw 5400 g/mol.

Beispiel 6

IP/ AS / ALS (10/75/15) -Terpolymer

In einem Glasreaktor, ausgestattet mit Rührer, Thermometer, pH-Elektrode und mehreren Zulaufeinrichtungen, wurden 27 g deionisiertes Wasser, 14 g Natriumallylsulfonat, 40 g Methanol, 0,5 g 2-Mercaptoethanol und 0,01 g Eisen(II)sulfat-Heptahydrat vorgelegt und auf eine Polymerisationsstarttemperatur von 20 °C temperiert. In einem separaten Zulaufgefäß wurden 81 g 90 gew.-%ige Acrylsäure bereitgestellt (Lösung A). In einem weiteren separaten Zulaufgefäß wurden 9 g Isoprenol mit 32 g Methanol vermischt (Lösung B). In einem weiteren separaten Zulaufgefäß wurden 10 g Wasser mit 3.5 g 2-Mercaptoethanol vermischt (Lösung C). Parallel dazu wurde eine dritte Lösung aus 5 g Natriumhydroxymethansulfinat (Brüggolit SFS Fa. Brüggemann GmbH) in 45 g Wasser hergestellt (Lösung D). Dann wurden 6 g Wasserstoffperoxid (30 Gew.-% in Wasser) zu dem Vorlagegemisch gegeben. Zeitgleich wurde mit der Zugabe von Lösung A, Lösung B, Lösung C und Lösung D zur gerührten Vorlage begonnen.

Lösung A wurde hierbei über 40 Minuten mit einer Dosiergeschwindigkeit von 120 g/h zugegeben.

Lösung B wurde über den genannten Zeitraum von 40 Minuten parallel mit einer Dosiergeschwindigkeit von 61 g/h zugegeben.

Lösung C wurde über den genannten Zeitraum von 40 Minuten parallel mit einer Dösiergeschwindigkeit von 21 g/h zugegeben.

Lösung D wurde über den genannten Zeitraum von 60 Minuten parallel mit einer Dosiergeschwindigkeit von 10 g/h zugegeben.

Anschließend wurde das Methanol unter reduziertem Druck entfernt. Die zurückbleibende wässrige Polymerlösung wurde mit einer 50 gew.-%igen Natriumhydroxid-Lösung auf einen pH-Wert von 2,6 eingestellt.

Das erhaltene Copolymer fiel in einer farblosen Lösung an, die einen Feststoffgehalt von 49 % aufwies. Das mittlere Molekulargewicht des Copolymers lag bei Mw 4000 g/mol.

Beispiel 7

IP/ AS / ALS (15/65/20) -Terpolymer

In einem Glasreaktor, ausgestattet mit Rührer, Thermometer, pH-Elektrode und mehreren Zulaufeinrichtungen, wurden 115 g deionisiertes Wasser, 21 g Natriumallylsulfonat, 0,5 g 2-Mercaptoethanol und 0,01 g Eisen(II)sulfat-Heptahydrat vorgelegt und auf eine Polymerisationsstarttemperatur von 20 °C temperiert. In einem separaten Zulaufgefäß wurden 81 g 90 gew.-%ige Acrylsäure mit 64 g Wasser vermischt (Lösung A). In ein weiteres separates Zulaufgefäß wurden 16,5 g Isoprenol eingefüllt (Lösung B). In einem weiteren separaten Zulaufgefäß wurden 10 g Wasser mit 3,5 g 2-Mercaptoethanol vermischt (Lösung C). Parallel dazu wurde eine dritte Lösung aus 5 g Natriumhydroxymethansulfinat (Brüggolit SFS Fa. Brüggemann GmbH) in 45 g Wasser hergestellt (Lösung D). Dann wurden 6 g Wasserstoffperoxid (30 Gew.-% in Wasser) zu dem Vorlagegemisch gegeben. Zeitgleich wurde mit der Zugabe von Lösung A, Lösung B, Lösung C und Lösung D zur gerührten Vorlage begonnen.

Lösung A wurde hierbei über 60 Minuten mit einer Dosiergeschwindigkeit von 145 g/h zugegeben.

Lösung B wurde über den genannten Zeitraum von 60 Minuten parallel mit einer Dosiergeschwindigkeit von 16,5 g/h zugegeben.

Lösung C wurde über den genannten Zeitraum von 60 Minuten parallel mit einer Dosiergeschwindigkeit von 13,5 g/h zugegeben.

Lösung D wurde über den genannten Zeitraum von 60 Minuten parallel mit einer Dosiergeschwindigkeit von 12 g/h zugegeben.

Anschließend wurde Methanol unter reduziertem Druck entfernt. Die zurückbleibende wässrige Polymerlösung wurde mit etwa einer 50 gew.-%igen Natriumhydroxid-Lösung auf einen pH-Wert von 2,6 eingestellt.
Das erhaltene Copolymer fiel in einer farblosen Lösung an, die einen Feststoffgehalt von 38 Gew.-% aufwies. Das mittlere Molekulargewicht des Copolymers lag bei Mw 6200 g/mol.

Beispiel 8

IP / AS / ALS (20/60/20) -Terpolymer

In einem Glasreaktor, ausgestattet mit Rührer, Thermometer, pH-Elektrode und mehre-ren Zulaufeinrichtungen, wurden 140 g deionisiertes Wasser, 31g Natriumallylsulfonat, 0,5 g 2-Mercaptoethanol und 0,02 g Eisen(II)sulfat-Heptahydrat vorgelegt und auf eine Polymerisationsstarttemperatur von 20 °C temperiert. In einem separaten Zulaufgefäß wurden 81 g 90 gew.-%ige Acrylsäure bereitgestellt (Lösung A). In ein weiteres separates Zulaufgefäß wurden 24 g Isoprenol eingefüllt (Lösung B). In einem weiteren separaten Zulaufgefäß wurden 15 g Wasser mit 3 g 2-Mercaptoethanol vermischt (Lösung C). Parallel dazu wurde eine dritte Lösung aus 5 g Natriumhydroxymethansulfinat (Brüggolit SFS Fa. Brüggemann GmbH) in 45 g Wasser hergestellt (Lösung D). Dann wurden 14 g Wasserstoffperoxid (30 Gew.-% in Wasser) zu dem Vorlagegemisch gegeben. Zeitgleich wurde mit der Zugabe von Lösung A, Lösung B, Lösung C und Lösung D zur gerührten Vorlage begonnen.

Lösung A wurde über einen Zeitraum von 60 Minuten mit einer Dosiergeschwindigkeit von 80 g/h zugegeben.

Lösung B wurde über den genannten Zeitraum von 60 Minuten parallel mit einer Dosiergeschwindigkeit von 24 g/h zugegeben.

Lösung C wurde über den genannten Zeitraum von 60 Minuten parallel mit einer Dosiergeschwindigkeit von 18 g/h zugegeben.

Lösung D wurde über den genannten Zeitraum von 70 Minuten parallel mit einer Dosiergeschwindigkeit von 20 g/h zugegeben.

Anschließend wurde die erhaltene Polymerlösung mit etwa einer 50 gew.-%igen Natriumhydroxid-Lösung auf einen pH-Wert von 2,6 eingestellt.

Das erhaltene Copolymer fiel in einer farblosen Lösung an, die einen Feststoffgehalt von 41 % aufwies. Das mittlere Molekulargewicht des Copolymers lag bei Mw 8 100 g/mol.

Vergleichsbeispiel A

Polyacrylsäure A

In einem Reaktor wurden 304,0 g VE-Wasser zusammen mit 1,84 g einer 50 gew.-%igen wässrigen Lösung von Phosphoriger Säure vorgelegt und unter Stickstoff-Atmosphäre auf 98 °C Innentemperatur erwärmt. Bei dieser Temperatur wurden gleichzeitig 461,0 g einer destillierten Acrylsäure, 132,0 g einer 7 gew.-%igen wässrigen Natriumperoxodisulfat-Lösung und 196,0 g einer 40 gew.-%igen wässrigen Natriumbisulfit-Lösung separat und parallel unter Rühren zudosiert. Acrylsäure wurde innerhalb von 4 Stunden, Natriumperoxodisulfat innerhalb von 4,25 Stunden und Natri-umbisulfit innerhalb von 3,75 Stunden zudosiert. Nach Ende des Acrylsäure-Zulaufs wurden 496,0 g einer 50 gew.-%igen wässrigen Natriumhydroxid-Lösung innerhalb von 1 Stunde bei 98 °C Innentemperatur zugegeben, und es wurde noch 1 Stunde bei 98 °C nachpolymerisiert. Danach wurde die Polymer-Lösung auf Raumtemperatur abge-kühlt. Man erhielt eine leicht viskose klare Polymerlösung mit einem pH-Wert von 6,9 und einem Feststoffgehalt von 43,5 %. Das gewichtsmittlere Molekulargewicht (Mw) betrug 4450 g/mol,

Vergleichsbeispiel B

AS / AMPS (80/20) -Copolymer

In einem Glasreaktor, ausgestattet mit Rührer, Thermometer, pH-Elektrode und mehreren Zulaufeinrichtungen, wurden 100 g deionisiertes Wasser, 0,5 g 2-Mercaptoethanol und 0,01 g Eisen(II)sulfat-Heptahydrat vorgelegt und auf eine Polymerisationsstarttemperatur von 20 °C temperiert. In einem separaten Zulaufgefäß wurden 88 g 90 gew.-%ige Acrylsäure bereitgestellt (Lösung A). In einem weiteren separaten Zulaufgefäß wurden 40 g einer 50 gew.-%ige wässrigen AM PS-Lösung mit 3,5 g 2-Mercaptoethanol vermischt (Lösung B). Parallel dazu wurde eine dritte Lösung aus 5 g Natriumhydroxymethansulfinat (Brüggolit SFS Fa. Brüggemann GmbH) in 45 g Wasser hergestellt (Lösung C). Dann wurden 6 g Wasserstoffperoxid (30 Gew.-% in Wasser) zu dem Vorlagemisch gegeben. Zeitgleich wurde mit der Zugabe von Lösung A, Lösung B und Lösung C zur gerührten Vorlage begonnen.

Lösung A wurde über einen Zeitraum von 60 Minuten mit einer Dosiergeschwindigkeit von 88 g/h zugegeben.

Lösung B wurde über einen Zeitraum von 60 Minuten parallel mit einer Dosiergeschwindigkeit von 44 g/h zugegeben.

Lösung C wurde über den genannten Zeitraum von 60 Minuten parallel mit einer Dosiergeschwindigkeit von 10 g/h zugegeben.

Anschließend wurde die erhaltene Polymerlösung mit etwa einer 50 gew.-%igen Natriumhydroxid-Lösung auf einen pH-Wert von 2,6 eingestellt.

Das erhaltene Copolymer fiel in einer farblosen Lösung an, die einen Feststoffgehalt von 39 Gew.-% aufwies. Das mittlere Molekulargewicht des Copolymers lag bei Mw 6500 g/mol.

Vergleichsbeispiel C

AS / AMPS / tBAM (70:20:10) -Terpolymer

In einem Glasreaktor, ausgestattet mit Rührer, Thermometer, pH-Elektrode und mehreren Zulaufeinrichtungen, wurden 70 g deionisiertes Wasser, 0,25 g 2-Mercaptoethanol und 0,02 g Eisen(II)sulfat-Heptahydrat vorgelegt und auf eine Polymerisationsstarttemperatur von 20 °C temperiert (Vorlage). In einem separaten Zulaufgefäß wurden 80 g 90 gew.-%ige Acrylsäure mit 62g 50% Natronlauge neutralisiert (Lösung A). In einem weiteren separaten Zulaufgefäß wurden 41 g einer 50 gew.-%igen wässrigen AMPS-Lösung mit 4 g 2-Mercaptoethanol vermischt (Lösung B). In einer weiteren Zulauflösung wurden 12 g tert.-Butylacrylamid mit 45 g Methanol vermischt (Lösung C).

Parallel dazu wurde eine Lösung aus 5 g Natriumhydroxymethansulfinat (Brüggolit SFS Fa. Brüggemann GmbH) in 45 g Wasser hergestellt (Lösung D). Dann wurden 6 g Wasserstoffperoxid (30 Gew.-% in Wasser) zu dem Vorlagemisch gegeben. Zeitgleich wurde mit der Zugabe von Lösung A, Lösung B, Lösung C und Lösung D zur gerührten Vorlage begonnen.

Lösung A wurde hierbei über 60 Minuten mit einer Dosiergeschwindigkeit von 80 g/h zugegeben.

Lösung B wurde über den genannten Zeitraum von 60 Minuten parallel mit einer Dosiergeschwindigkeit von 45 g/h zugegeben.

Lösung C wurde über den genannten Zeitraum von 60 Minuten parallel mit einer Dosiergeschwindigkeit von 47 g/h zugegeben.

Lösung D wurde über den genannten Zeitraum von 70 Minuten parallel mit einer Dosiergeschwindigkeit von 15 g/h zugegeben.

Anschließend wurde das Methanol unter reduziertem Druck entfernt. Die zurückbleibende wässrige Polymerlösung wurde mit einer 50 gew.-%igen Natriumhydroxid-Lösung auf einen pH-Wert von 2,6 eingestellt.
Das erhaltene Copolymer fiel in einer farblosen Lösung an, die einen Feststoffgehalt von 40 Gew.-% aufwies. Das mittlere Molekulargewicht des Copolymers lag bei Mw 5800 g/mol.

**Calciumcarbonat-Inhibierungstest**

Eine Lösung aus $NaHCO_3$, $Mg_2SO_4$, $CaCl_2$ und Polymer wird 2 h bei 70 °C im Wasserbad geschüttelt. Nach Filtration der noch warmen Lösung über einen 0,45 $\mu$m Milexfilter, wird der Ca-Gehalt des Filtrats durch optische Emissionsspektrometrie mit induktiv gekoppeltem Plasma (ICP-OES) ermittelt und durch Vergleich vorher/nachher die $CaCO_3$-Inhibierung in % gemäß nachstehender Formel I ermittelt.

Bedingungen:

| | |
|---|---|
| $Ca^{2+}$ | 215 mg/L |
| $Mg^{2+}$ | 43 mg/L |
| $HCO_3$ | 1220 mg/L |
| $Na^+$ | 460 mg/L |
| $Cl^-$ | 380 mg/L |
| $SO_4^{2-}$ | 170 mg/L |
| Polymer 100%ig | 3 mg/L |
| Temperatur | 70 °C |
| Zeit | 2 Stunden |
| pH | 8,0-8,5 |

Formel I:

$$CaCO_3\text{- Inhibierung (\%)} = \frac{mg\,(Ca^{2+})\text{ nach 24 h} - mg\,(Ca^{2+})\text{ Blindwert nach 24 h}}{mg\,(Ca^{2+})\text{ Nullwert} - mg\,(Ca^{2+})\text{ Blindwert nach 24 h}} \times 100$$

**Calciumsulfat-Inhibierungstest**

Eine Lösung aus NaCl, $Na_2SO_4$, $CaCl_2$ und Polymer wurde 24 h bei 70 °C im Wasserbad geschüttelt. Nach Filtration der noch warmen Lösung über einen 0,45 $\mu$m Milexfilter wird der Ca-Gehalt des Filtrats durch optische Emissionsspektrometrie mit induktiv gekoppeltem Plasma (ICP-OES) ermittelt und durch Vergleich vorher/nachher die $CaSO_4$-Inhibierung in % gemäß nachstehender Formel II ermittelt.

Bedingungen:

| | |
|---|---|
| $Ca^{2+}$ | 2940 mg/l |
| $SO_4^{2-}$ | 7200 mg/l |
| $Na^+$ | 6400 mg/l |
| $Cl^-$ | 9700 mg/l |

Polymer 100%ig 5 mg/l (100 %ig)

| | |
|---|---|
| Temperatur | 90 °C |
| Zeit | 24 Stunden |
| pH | 8,0-8,5 |

Formel II:

$$CaSO_4\text{- Inhibierung (\%)} = \frac{mg\,(Ca^{2+})\text{ nach 24 h} - mg\,(Ca^{2+})\text{ Blindwert nach 24 h}}{mg\,(Ca^{2+})\text{ Nullwert} - mg\,(Ca^{2+})\text{ Blindwert nach 24 h}} \times 100$$

**Calciumphosphat-Inhibierungstest**

Eine Lösung aus $H_3PO_4$, $CaCl_2$, $NaHCO_3$, $MgSO_4$ und Polymer wurde 24 h bei 70 °C im Wasserbad geschüttelt. Nach Filtration der noch warmen Lösung über einen 0,45 $\mu$m Milexfilter wird der Phosphat-Gehalt des Filtrats durch optische Emissionsspektrometrie mit induktiv gekoppeltem Plasma (ICP-OES) ermittelt und durch Vergleich vorher / nachher die $Ca_3(PO_4)_2$-Inhibierung in % gemäß nachstehender Formel III ermittelt:

Bedingungen:

| | |
|---|---|
| $Ca^{2+}$ | 148 mg/L |
| $Mg^{2+}$ | 38 mg/L |
| $PO_4^{3-}$ | 10 mg/L |
| $SO_4^{2-}$ | 157 mg/L |
| $Cl^-$ | 263 mg/L |
| $Na^+$ | 146 mg/L |
| $HCO_3^-$ | 388 mg/L |
| Polymer 100%ig | 15 mg/L |
| Temperatur | 70 °C |
| Zeit | 24 Stunden |
| pH | 8,0 bis 8,5 |

Formel III:

$$Ca_3(PO_4)_2\text{- Inhibierung (\%)} = \frac{mg\,(PO_4^{3-})\text{ nach 24 h} - mg\,(PO_4^{3-})\text{ Blindwert nach 24 h}}{mg\,(PO_4^{3-})\text{ Nullwert} - mg\,(PO_4^{3-})\text{ Blindwert nach 24 h}} \times 100$$

Die Ergebnisse der Tests sind in der nachstehenden Tabelle zusammengefasst.

Tabelle

| Nr. | Monomere | Gewicht % | $M_w$ g/mol | Inhibierung $CaCO_3$ in % | Inhibierung $CaSO_4$ in % | Inhibierung $Ca_3(PO_4)_2$ in % |
|---|---|---|---|---|---|---|
| 1 | IP/AS/AMPS | 10/70/20 | 4900 | 69 | 35 | 87 |
| 2 | IP/AS/AMPS | 10/70/20 | 10.000 | 74 | 34 | 90 |
| 3 | IP/AS/AMPS | 15/60/25 | 6500 | 72 | 41 | 88 |
| 4 | IP/AS/AMPS | 20/60/20 | 11.000 | 75 | 35 | 86 |
| 5 | IP/AS/ALS | 10/70/20 | 5400 | 66 | 36 | 79 |
| 6 | IP/AS/ALS | 10/75/15 | 4000 | 63 | 38 | 80 |
| 7 | IP/AS/ALS | 15/65/25 | 6200 | 60 | 25 | 83 |
| 8 | IP/AS/ALS | 20/60/20 | 8100 | 70 | 32 | 82 |
| | | | | | | |
| A | Polyacrylsäure A | | 4500 | 60 | 15 | 3 |
| B | AS/AMPS | 80/20 | 6500 | 66 | 28 | 70 |
| C | AS/AMPS/ tBAM | 70/20/10 | 5800 | 45 | 29 | 72 |

Abkürzungen:
IP = Isoprenol
AS = Acrylsäure
ALS = Allylsulfonsäure-Natriumsalz
AMPS = 2-Acrylamido-2-methylpropansulfonsäure
tBAM = tert.-Butylacrylamid

**Patentansprüche**

1. Copolymere aus

    (a) 5 bis 40 Gew.-% Isoprenol,
    (b) 5 bis 93 Gew.-% mindestens einer monoethylenisch ungesättigten $C_3$- bis $C_8$-Monocarbonsäure, eines Anhydrids oder Salzes derselben,
    (c) 2 bis 90 Gew.-% eines oder mehrerer Sulfonsäuregruppen enthaltender Monomere.

2. Copolymere nach Anspruch 1, **dadurch gekennzeichnet, dass** die monoethylenisch ungesättigte $C_3$-$C_8$-Monocarbonsäure (b) ausgewählt ist aus der Gruppe bestehend aus Acrylsäure, Methacrylsäure, Ethacrylsäure, Vinylessigsäure, Allylessigsäure und Crotonsäure.

3. Copolymere nach Anspruch 2, **dadurch gekennzeichnet, dass** die monoethylenisch ungesättigte $C_3$-$C_8$-Monocarbonsäure (b) Acrylsäure oder Methacrylsäure ist.

4. Copolymere nach einem der Ansprüche 1 bis 3, **dadurch gekennzeichnet, dass** das Sulfonsäuregruppen enthaltende Monomer (c) ausgewählt ist aus der Gruppe bestehend aus 1-Acrylamidopropansulfonsäure, 2-Acrylamido-2-propansulfonsäure, 2-Acrylamido-2-methylpropansulfonsäure (AMPS), 2-Methacrylamido-2-methylpropansulfonsäure, 3-Methacrylamido-2-hydroxy-propansulfonsäure, 2-Sulfoethylmethacrylat, Styrolsulfonsäure Vinylsulfonsäure, Allylsulfonsäure (ALS) und Methallylsulfonsäure.

5. Copolymere nach Anspruch 4, **dadurch gekennzeichnet, dass** das Sulfonsäuregruppen-haltige Monomer (c) 2-Acrylamido-2-methylpropansulfonsäure (AMPS) oder Allylsulfonsäure ist.

6. Copolymere nach einem der Ansprüche 1 bis 5, **dadurch gekennzeichnet, dass** deren gewichtsmittleres Molekulargewicht 2000 bis 20 000 g/mol beträgt.

7. Copolymere nach Anspruch 6, **dadurch gekennzeichnet, dass** 5 bis 30 Gew.-% Isoprenol (a), 50 bis 80 Gew.-% der monoethylenisch ungesättigten $C_3$- bis $C_8$-Carbonsäure (b) und 10 bis 30 Gew.-% des Sulfonsäuregruppenhaltigen Monomers (c) enthalten sind.

8. Verfahren zur Herstellung von Copolymeren aus

   (a) 5 bis 40 Gew.-% Isoprenol,
   (b) 5 bis 93 Gew.-% mindestens einer monoethylenisch ungesättigten $C_3$- bis $C_8$-Monocarbonsäure, eines Anhydrids oder Salzes derselben,
   (c) 2 bis 90 Gew.-% eines oder mehrerer Sulfonsäuregruppen enthaltender Monomere,

   bei dem die Monomere (a), (b) und (c) in Gegenwart eines redoxchemischen Initiators und eines Reglers bei einer Temperatur im Bereich von 10 bis 80 °C polymerisiert werden.

9. Verfahren nach Anspruch 8, **dadurch gekennzeichnet, dass** der redoxchemische Initiator ein Peroxid und ein Reduktionsmittel umfasst.

10. Verfahren nach Anspruch 9, **dadurch gekennzeichnet, dass** der redoxchemische Initiator zusätzlich ein Eisensalz umfasst.

11. Verfahren nach Anspruch 9 oder 10, **dadurch gekennzeichnet, dass** der redoxchemische Initiator als Peroxid Wasserstoffperoxid umfasst.

12. Verfahren nach einem der Ansprüche 9 bis 11, **dadurch gekennzeichnet, dass** der redoxchemische Initiator als Reduktionsmittel Natriumhydroxymethansulfinat oder Natrium-2-hydroxy-2-sulfinatoessigsäure umfasst.

13. Verfahren nach einem der Ansprüche 8 bis 12, **dadurch gekennzeichnet, dass** der Regler eine Mercaptoverbindung umfasst.

14. Verwendung der Copolymere gemäß einem der Ansprüche 1 bis 7 als Belagsinhibitoren in wasserführenden Systemen.

15. Verwendung der Copolymere gemäß einem der Ansprüche 1 bis 7 zur Inhibierung der Ausfällung und Ablagerung von Calciumsalzen oder Magnesiumsalzen in wasserführenden Systemen.

16. Verwendung nach Anspruch 15 zur Inhibierung der Ausfällung und Ablagerung von Calciumcarbonat, Calciumsulfat, Calciumphosphat oder Calciumphosphonat.

17. Verwendung nach Anspruch 15 oder 16 in Meerwasser-Entsalzungsanlagen, Brackwasser-Entsalzungsanlagen, Kühlwassersystemen und Kesselspeisewassersystemen.

**Claims**

1. A copolymer of

   (a) 5 to 40% by weight of isoprenol,
   (b) 5 to 93% by weight of at least one monoethylenically unsaturated $C_3$ to $C_8$ monocarboxylic acid, an anhydride or salt of same,
   (c) 2 to 90% by weight of one or more sulfonic acid group-comprising monomers.

2. The copolymer according to claim 1, wherein the monoethylenically unsaturated $C_3$-$C_8$ monocarboxylic acid (b) is selected from the group consisting of acrylic acid, methacrylic acid, ethacrylic acid, vinylacetic acid, allylacetic acid and crotonic acid.

3. The copolymer according to claim 2, wherein the monoethylenically unsaturated $C_3$-$C_8$ monocarboxylic acid (b) is acrylic acid or methacrylic acid.

4. The copolymer according to any one of claims 1 to 3, wherein the sulfonic acid group-comprising monomer (c) is selected from the group consisting of 1-acrylamidopropanesulfonic acid, 2-acrylamido-2-propanesulfonic acid, 2-acrylamido-2-methylpropanesulfonic acid (AMPS), 2-methacrylamido-2-methylpropanesulfonic acid, 3-methacrylamido-2-hydroxypropanesulfonic acid, 2-sulfoethyl methacrylate, styrenesulfonic acid, vinylsulfonic acid, allylsulfonic acid (ALS) and methallylsulfonic acid.

5. The copolymer according to claim 4, wherein the sulfonic acid group-comprising monomer (c) is 2-acrylamido-2-methylpropanesulfonic acid (AMPS) or allylsulfonic acid.

6. The copolymer according to any one of claims 1 to 5, wherein the weight-average molecular weight thereof is 2000 to 20 000 g/mol.

7. The copolymer according to claim 6, wherein 5 to 30% by weight of isoprenol (a), 50 to 80% by weight of the monoethylenically unsaturated $C_3$ to $C_8$ carboxylic acid (b) and 10 to 30% by weight of the sulfonic acid group-comprising monomer (c) are present.

8. A method for producing copolymers of

    (a) 5 to 40% by weight of isoprenol,
    (b) 5 to 93% by weight of at least one monoethylenically unsaturated $C_3$ to $C_8$ monocarboxylic acid, an anhydride or salt of same,
    (c) 2 to 90% by weight of one or more sulfonic acid group-comprising monomers,

    in which the monomers (a), (b) and (c) are polymerized in the presence of a redox chemical initiator and a chain-transfer agent at a temperature in the range from 10 to 80°C.

9. The method according to claim 8, wherein the redox chemical initiator comprises a peroxide and a reducing agent.

10. The method according to claim 9, wherein the redox chemical initiator additionally comprises an iron salt.

11. The method according to claim 9 or 10, wherein the redox chemical initiator, as peroxide, comprises hydrogen peroxide.

12. The method according to any one of claims 9 to 11, wherein the redox chemical initiator as reducing agent, comprises sodium hydroxymethanesulfinate or sodium-2-hydroxy-2-sulfinatoacetic acid.

13. The method according to any one of claims 8 to 12, wherein the chain-transfer agent comprises a mercapto compound.

14. The use of the copolymer according to any one of claims 1 to 7 as deposit inhibitor in water-bearing systems.

15. The use of the copolymer according to any one of claims 1 to 7 for inhibiting the precipitation and sedimentation of calcium salts or magnesium salts in water-bearing systems.

16. The use according to claim 15 for inhibiting the precipitation and sedimentation of calcium carbonate, calcium sulfate, calcium phosphate or calcium phosphonate.

17. The use according to claim 15 or 16 in seawater desalination plants, brackish water desalination plants, cooling water systems and boiler feed water systems.

**Revendications**

1. Copolymères constitués par

(a) 5 à 40% en poids d'isoprénol,

(b) 5 à 93% en poids d'au moins un acide monocarboxylique en $C_3$-$C_8$ éthyléniquement monoinsaturé, d'un anhydride ou d'un sel de celui-ci,

(c) 2 à 90% en poids d'un ou de plusieurs monomères contenant des groupes acide sulfonique.

**2.** Copolymères selon la revendication 1, **caractérisés en ce que** l'acide monocarboxylique en $C_3$-$C_8$ éthyléniquement monoinsaturé (b) est choisi dans le groupe constitué par l'acide acrylique, l'acide méthacrylique, l'acide éthacrylique, l'acide vinylacétique, l'acide allylacétique et l'acide crotonique.

**3.** Copolymères selon la revendication 2, **caractérisés en ce que** l'acide monocarboxylique en $C_3$-$C_8$ éthyléniquement monoinsaturé (b) est l'acide acrylique ou l'acide méthacrylique.

**4.** Copolymères selon l'une quelconque des revendications 1 à 3, **caractérisés en ce que** le monomère contenant des groupes acide sulfonique (c) est choisi dans le groupe constitué par l'acide 1-acrylamidopropanesulfonique, l'acide 2-acrylamido-2-propanesulfonique, l'acide 2-acrylamido-2-méthylpropanesulfonique (AMPS), l'acide 2-méthacrylamido-2-méthylpropanesulfonique, l'acide 3-méthacrylamido-2-hydroxypropanesulfonique, le méthacrylate de 2-sulfoéthyle, l'acide styrènesulfonique, l'acide vinylsulfonique, l'acide allylsulfonique (ALS) et l'acide méthallylsulfonique.

**5.** Copolymères selon la revendication 4, **caractérisés en ce que** le monomère contenant des groupes acide sulfonique (c) est l'acide 2-acrylamido-2-méthylpropanesulfonique (AMPS) ou l'acide allylsulfonique.

**6.** Copolymères selon l'une quelconque des revendications 1 à 5, **caractérisés en ce que** leur poids moléculaire pondéral moyen est de 2000 à 20.000 g/mole.

**7.** Copolymères selon la revendication 6, **caractérisés en ce qu'**ils contiennent 5 à 30 % en poids d'isoprénol (a), 50 à 80% en poids de l'acide carboxylique en $C_3$-$C_8$ éthyléniquement monoinsaturé (b) et 10 à 30% en poids du monomère contenant des groupes acide sulfonique (c).

**8.** Procédé pour la préparation de copolymères, constitués par

(a) 5 à 40% en poids d'isoprénol,

(b) 5 à 93% en poids d'au moins un acide monocarboxylique en $C_3$-$C_8$ éthyléniquement monoinsaturé, d'un anhydride ou d'un sel de celui-ci,

(c) 2 à 90% en poids d'un ou de plusieurs monomères contenant des groupes acide sulfonique,

dans lequel les monomères (a), (b) et (c) sont polymérisés en présence d'un initiateur chimique redox et d'un agent de régulation à une température dans la plage de 10 à 80°C.

**9.** Procédé selon la revendication 8, **caractérisé en ce que** l'initiateur chimique redox comprend un peroxyde et un agent de réduction.

**10.** Procédé selon la revendication 9, **caractérisé en ce que** l'initiateur chimique redox comprend en outre un sel de fer.

**11.** Procédé selon la revendication 9 ou 10, **caractérisé en ce que** l'initiateur chimique redox comprend, comme peroxyde, du peroxyde d'hydrogène.

**12.** Procédé selon l'une quelconque des revendications 9 à 11, **caractérisé en ce que** l'initiateur chimique redox contient, comme agent de réduction, de l'hydroxyméthanesulfinate de sodium ou le sel sodique de l'acide 2-hydroxy-2-sulfinatoacétique.

**13.** Procédé selon l'une quelconque des revendications 8 à 12, **caractérisé en ce que** l'agent de régulation comprend un composé à fonction mercapto.

**14.** Utilisation des copolymères selon l'une quelconque des revendications 1 à 7 comme inhibiteurs de dépôts dans des systèmes guidant l'eau.

**15.** Utilisation des copolymères selon l'une quelconque des revendications 1 à 7 pour inhiber la précipitation et le dépôt

16

de sels de calcium ou de sels de magnésium dans des systèmes guidant l'eau.

16. Utilisation selon la revendication 15 pour inhiber la précipitation et le dépôt de carbonate de calcium, de sulfate de calcium, de phosphate de calcium ou de phosphonate de calcium.

17. Utilisation selon la revendication 15 ou 16 dans des installations de désalinisation de l'eau de mer, des installations de désalinisation d'eau saumâtre, des systèmes d'eau de refroidissement et des systèmes d'eau d'alimentation de chaudière.

**IN DER BESCHREIBUNG AUFGEFÜHRTE DOKUMENTE**

**In der Beschreibung aufgeführte Patentdokumente**

- US 4711725 A
- US 4952327 A
- JP 59102496 B
- EP 337694 A
- EP 396303 A

**In der Beschreibung aufgeführte Nicht-Patentliteratur**

- **F. LYNEN.** *Liebigs Ann. Chem.,* 1960, vol. 360, 58-70